# EUROPEAN PATENT APPLICATION

(11) **EP 4 715 768 A1**
(43) Date of publication of application: **25.03.2026**
(21) Application number: 25202481.5
(22) Date of filing: 16.09.2025
(51) Int. Cl.: G07C 9/00

(54) **LOCK CONTROL METHOD AND APPARATUS, MEDIUM, AND DEVICE**

(30) Priority: 19.09.2024 CN 202411312395
(71) Applicant: Alipay (Hangzhou) Information Technology Co., Ltd., Hangzhou, Zhejiang 310000 (CN)
(72) Inventor: QIN, Xingbin, Hangzhou, Zhejiang (CN)
(74) Representative: Goddar, Heinz J.

(57) **Abstract**

Embodiments of the present specification disclose a lock control method and apparatus, a medium, and a device. This solution can be applied to a trusted execution environment for execution. A first wireless communication apparatus is disposed in an adjacent area of a lock, a user carries a second communication apparatus, and control permission for the lock is bound to the second communication module. Once the user enters a signal sensing range of the first wireless communication apparatus, the first wireless communication module is triggered to establish a communication connection with the second wireless communication module. Signal strength of the communication connection changes with movement of the second wireless communication apparatus carried by the user. Therefore, a distance change trend of the second wireless communication apparatus relative to the first wireless communication apparatus is determined based on a monitored signal strength change trend. If it is determined that the user is moving close to the lock, the lock can be controlled to be in an unlocked state. If it is determined that the user is moving away from the lock, the lock can be controlled to be in a locked state.

## Description

### TECHNICAL FIELD

The present invention relates to the field of automatic control technologies, and in particular, to a lock control method and apparatus, a medium, and a device.

### BACKGROUND

As a common safety apparatus, locks are mainly used to provide safety protection, and protect property or personal safety by restricting unauthorized access. In an existing lock control manner, users usually need to perform certain operations such as using a key, entering a password, providing a fingerprint, or another operation to unlock or lock. Such operations are very common in daily life. For example, door locks of vehicles are a typical example. The users need to perform operations such as using a physical key, tapping a remote control, and interacting with a screen of a smart device to control the door locks of the vehicles to unlock or lock.

It can be learned that the existing lock control manner relies on the users to perform lock control operations. Therefore, additional burden and disturbance are imposed on the users.

### SUMMARY

An implementation of the present specification provides a lock control method. A first wireless communication apparatus is disposed in an adjacent area of a lock, and control permission for the lock is bound to a second wireless communication apparatus; and when a user carries the second wireless communication apparatus, the method includes: monitoring a signal strength change trend of a communication connection in response to that the communication connection is established between the first wireless communication apparatus and the second wireless communication apparatus; determining a distance change trend of the second wireless communication apparatus relative to the first wireless communication apparatus based on the signal strength change trend; and if it is determined, based on the distance change trend, that the user is moving close to the lock, controlling the lock to be in an unlocked state; and/or if it is determined, based on the distance change trend, that the user is moving away from the lock, controlling the lock to be in a locked state.

An implementation of the present specification provides a lock control apparatus. A first wireless communication apparatus is disposed in an adjacent area of a lock, and control permission for the lock is bound to a second wireless communication apparatus; and the apparatus includes: a monitoring module, configured to: when a user carries the second wireless communication apparatus, monitor a signal strength change trend of a communication connection in response to that the communication connection is established between the first wireless communication apparatus and the second wireless communication apparatus; a determining module, configured to determine a distance change trend of the second wireless communication apparatus relative to the first wireless communication apparatus based on the signal strength change trend; and a determining control module, configured to: if it is determined, based on the distance change trend, that the user is moving close to the lock, control the lock to be in an unlocked state; and/or if it is determined, based on the distance change trend, that the user is moving away from the lock, control the lock to be in a locked state.

An implementation of the present specification further provides a computer program product. The computer program product stores at least one instruction, and the at least one instruction is adapted to be loaded by a processor and to perform the steps of the above method.

An implementation of the present specification further provides a storage medium. The storage medium stores a computer program, and the computer program is adapted to be loaded by a processor and to perform the steps of the above method.

An implementation of the present specification further provides an electronic device, including a processor and a memory. The memory stores a computer program, and the computer program is adapted to be loaded by the processor and to perform the steps of the above methods.

In the technical solutions of the present specification, the first wireless communication apparatus is disposed in the adjacent area of the lock, the user carries the second communication apparatus, and control permission for the lock is bound to the second communication module. Once the user enters a signal sensing range of the first wireless communication apparatus, the first wireless communication module is triggered to establish the communication connection with the second wireless communication module. Signal strength of the communication connection changes with movement of the second wireless communication apparatus carried by the user. Therefore, the distance change trend of the second wireless communication apparatus relative to the first wireless communication apparatus is determined based on the monitored signal strength change trend. It can be considered that the distance change trend herein can represent a distance change trend between the user and the lock, and can be used to determine that the user is moving close to the lock, is moving away from the lock, or is not moved. If it is determined that the user is moving close to the lock, the lock can be controlled to be in the unlocked state. If it is determined that the user is moving away from the lock, the lock can be controlled to be in the locked state. This solution can be applied to a trusted execution environment for execution.

According to the above technical solution, in a process in which the user is moving close to or away from the lock, a lock state can be controlled, without a need to rely on a lock control operation of the user. This is imperceptible to the user, and does not impose additional burden or disturbance on the user.

### BRIEF DESCRIPTION OF DRAWINGS

FIG. 1 is a schematic flowchart illustrating a lock control method according to an implementation of the present specification;
FIG. 2 is a schematic diagram illustrating area division according to an implementation of the present specification;
FIG. 3A is a schematic diagram illustrating a scenario of vehicle door lock control according to an implementation of the present specification;
FIG. 3B is a schematic diagram illustrating an effect of vehicle door lock control according to an implementation of the present specification;
FIG. 4A is a schematic flowchart illustrating unlocking according to an implementation of the present specification;
FIG. 4B is a schematic flowchart illustrating locking according to an implementation of the present specification;
FIG. 5 is a schematic structural diagram illustrating a lock control apparatus according to an implementation of the present specification; and
FIG. 6 is a schematic structural diagram illustrating an electronic device according to an implementation of the present specification.

### DESCRIPTION OF IMPLEMENTATIONS

To make the objectives, technical solutions, and advantages of the present specification clearer, the following clearly and comprehensively describes the technical solutions in the present specification with reference to specific implementations of the present specification and corresponding accompanying drawings. Clearly, the described implementations are merely some rather than all of the implementations of the present specification. This solution can be applied to a trusted execution environment. All other implementations obtained by those of ordinary skill in the art based on the implementations of the present specification without innovative efforts all fall within the protection scope of the present specification.

Several concepts involved in the present specification are first described herein.

A lock is a tool that provides safety protection for a specific space. The lock can be unlocked only with control permission for the lock, to access the specific space. The control permission herein can be embodied by using a physical key, a fingerprint, a password, etc. Users operate to unlock by using the physical key, the fingerprint, or the password. The control permission herein can also be implemented by using an electronic token. To be specific, an apparatus bound to the electronic token (which represents the control permission) can be configured to control the lock.

A wireless communication apparatus is a device that transmits data by using a wireless signal. A communication connection can be established between wireless communication apparatuses based on various communication technologies (for example, Bluetooth, Wi-Fi, or Zigbee). In addition to having a communication capability, the wireless communication apparatus can be further equipped with a logic chip for logical processing. For example, the wireless communication apparatus can be a smart device (for example, a mobile phone, a tablet computer, or a vehicle) that has a wireless communication capability.

An adjacent area of a lock is an area within a close range around the lock. For example, an area whose center is the lock and whose radius is 2 meters is an adjacent area of the lock.

In one or more implementations provided in the present specification, a first wireless communication apparatus is disposed in the adjacent area of the lock, a user carries a second communication apparatus, and control permission for the lock is bound to the second communication module. Once the user enters a signal sensing range of the first wireless communication apparatus, the first wireless communication module is triggered to establish a communication connection with the second wireless communication module. Signal strength of the communication connection changes with movement of the second wireless communication apparatus carried by the user. Therefore, a distance change trend of the second wireless communication apparatus relative to the first wireless communication apparatus is determined based on a monitored signal strength change trend. It can be considered that the distance change trend herein can represent a distance change trend between the user and the lock, and can be used to determine that the user is moving close to the lock, is moving away from the lock, or is not moved. If it is determined that the user is moving close to the lock, the lock can be controlled to be in an unlocked state. If it is determined that the user is moving away from the lock, the lock can be controlled to be in a locked state.

According to the above technical solution, in a process in which the user is moving close to or away from the lock, a lock state can be controlled, without a need to rely on a lock control operation of the user. This is imperceptible to the user, and does not impose additional burden or disturbance on the user.

The following describes the technical solutions of the present specification in detail with reference to the accompanying drawings.

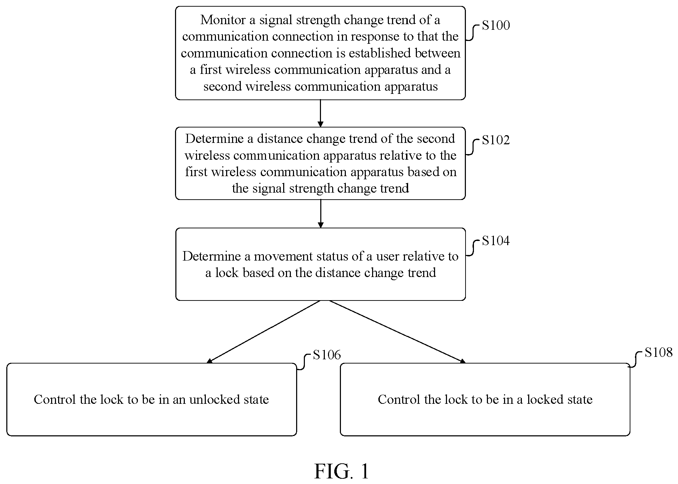

FIG. 1 is a schematic flowchart illustrating a lock control method according to the present specification. The method includes the following steps.

S100: Monitor a signal strength change trend of a communication connection in response to that the communication connection is established between a first wireless communication apparatus and a second wireless communication apparatus.

A method procedure shown in FIG. 1 has a variety of execution bodies.

For example, the execution body can be a network server. The network server can obtain, through a network, signal strength uploaded by the first wireless communication apparatus or the second wireless communication apparatus, so that the network server can monitor the signal strength change trend.

For another example, the execution body can be the first wireless communication apparatus or the second wireless communication apparatus.

A type of a communication signal supported by the first wireless communication apparatus can be the same as a type of a communication signal supported by the second wireless communication apparatus, which means that the communication connection can be established between the first wireless communication apparatus and the second wireless communication apparatus based on a communication signal of the type.

For example, the communication signal can be a Bluetooth signal, and the corresponding communication connection can be a Bluetooth connection. For another example, the communication signal can be a Wi-Fi signal, and the corresponding communication connection can be a Wi-Fi connection (the first wireless communication apparatus serves as a Wi-Fi hotspot, and the second wireless communication apparatus is connected to the Wi-Fi hotspot).

It should be noted that the first wireless communication apparatus is disposed in an adjacent area of a lock. This means that a location of the first wireless communication apparatus is close to a location of the lock, and the location of the first wireless communication apparatus can approximately serve as the location of the lock.

It should be noted that the first wireless communication apparatus can be a smart device with a wireless communication function. In an example, when the lock is a door lock of a vehicle, the first wireless communication apparatus can be an in-vehicle infotainment apparatus of the vehicle, the in-vehicle infotainment apparatus has a wireless communication function (for example, Bluetooth or Wi-Fi), and the second wireless communication apparatus can be a portable apparatus with a wireless communication function.

Control permission for the lock is bound to the second wireless communication apparatus. As such, the communication connection established between the second wireless communication apparatus and the first wireless communication apparatus means that the lock can be controlled through the communication connection. Other than the second wireless communication apparatus, a third wireless communication apparatus cannot implement control of the lock through the communication connection even if a communication connection is established between the third wireless communication apparatus and the first wireless communication apparatus.

The user can carry the second wireless communication apparatus, to implement operation-free lock control. It is easy to understand that the user carries the second wireless communication apparatus, and once the user enters a wireless signal coverage area of the first wireless communication apparatus, the communication connection can be established between the first wireless communication apparatus and the second wireless communication apparatus.

In an example, "operation-free" can be understood as eliminating a common lock control operation. However, the user may perform a triggering operation on establishing the communication connection between the second wireless communication apparatus and the first wireless communication apparatus.

In another example, "operation-free" can be understood as eliminating all operations. When the user carries the second wireless communication apparatus, if the user is moving close to or away from the lock, the communication connection is automatically established between the second wireless communication apparatus and the first wireless communication apparatus in a case of being imperceptible to the user.

Signal strength of the communication connection is usually inversely proportional to a distance between apparatuses. The distance between apparatuses is a distance between the first wireless communication apparatus and the second wireless communication apparatus. In other words, stronger signal strength indicates a closer distance between the second wireless communication apparatus and the first wireless communication apparatus. In addition, the distance between the second wireless communication apparatus and the first wireless communication apparatus can be estimated based on the signal strength of the communication connection.

S102: Determine a distance change trend of the second wireless communication apparatus relative to the first wireless communication apparatus based on the signal strength change trend.

S104: Determine a movement status of the user relative to the lock based on the distance change trend. Step S106 is performed if it is determined that the user is moving closer to the lock; or step S108 is performed if it is determined that the user is moving away from the lock.

The distance change trend of the second wireless communication apparatus relative to the first wireless communication apparatus can approximately serve as a distance change trend of the user relative to the lock. The distance change trend of the user relative to the lock can reflect the movement status of the user relative to the lock.

S106: Control the lock to be in an unlocked state.

S108: Control the lock to be in a locked state.

If it is determined that the user is moving close to the lock, the lock is to be controlled to be in the unlocked state. If it is determined that the user is moving away from the lock, the lock is to be controlled to be in the locked state.

In some implementations, state information of the lock can be further obtained in response to that the communication connection is established between the first wireless communication apparatus and the second wireless communication apparatus. In this implementation, for step S106, a state of the lock can be changed to the unlocked state when the state information indicates the locked state; and the state is not changed when the state information indicates the unlocked state. For step S108, a state of the lock can be changed to the locked state when the state information indicates the unlocked state; and the state is not changed when the state information indicates the unlocked state.

In some implementations, if the method shown in FIG. 1 is performed by the second wireless communication apparatus, when the state of the lock is to be changed to the unlocked state, an unlocking control instruction can be sent to the first wireless communication apparatus, so that the first wireless communication state changes the state of the lock to the unlocked state in response to the unlocking control instruction. When the state of the lock is to be changed to the locked state, a locking control instruction can be sent to the first wireless communication apparatus, so that the first wireless communication state changes the state of the lock to the locked state in response to the locking control instruction.

In addition, it should be noted that, in step S104, there can be a plurality of implementations of determining the movement status of the user relative to the lock based on the distance change trend.

In an example implementation, a maximum distance threshold and a minimum distance threshold can be set. If the distance change trend indicates that the distance between the second wireless communication apparatus and the first wireless communication apparatus starts from the maximum distance threshold and becomes smaller, it indicates that the user is moving close to the lock; or if the distance change trend indicates that the distance between the second wireless communication apparatus and the first wireless communication apparatus starts from the minimum distance threshold and becomes larger, it indicates that the user is moving away from the lock.

In another example implementation, in consideration that monitoring precision of the signal strength of the communication connection may not be particularly high, precision of the distance change trend estimated based on the monitored signal strength change trend may not be particularly high either. Therefore, an abnormal movement status of the user relative to the lock is determined based on areas in different ranges around the lock. This implementation can be compatible with low signal strength monitoring precision and low distance estimation precision.

For example, the adjacent area includes a location point whose distance from the first wireless communication apparatus is less than or equal to a first distance; an external area includes a location point whose distance from the first wireless communication apparatus falls within a second distance interval; the first distance is less than or equal to a left-end value of the second distance interval; and a communication distance between the second wireless communication apparatus and the first wireless communication apparatus is greater than or equal to a right-end value of the second distance interval; and

Further, a middle area can be further added, and compatibility with the low signal strength monitoring precision or the low distance estimation precision can be further improved. For example, a middle area includes a location point whose distance from the first wireless communication apparatus falls within a third distance interval; the first distance is less than or equal to a left-end value of the third distance interval; and the left-end value of the second distance interval is greater than or equal to a right-end value of the third distance interval.

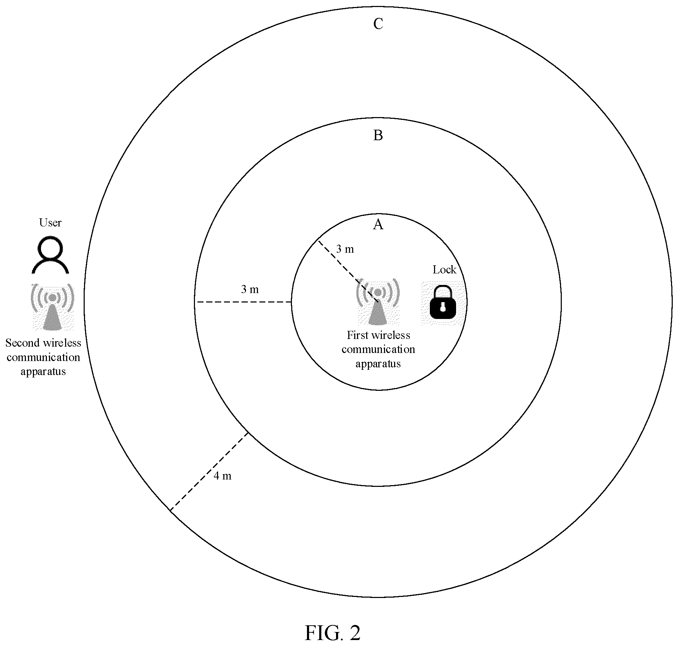

For example, as shown in FIG. 2, the adjacent area (denoted as A) is a circular area whose center is the first wireless communication apparatus and whose radius is 3 meters (first distance). The middle area (denoted as B) is an arc-shaped area whose center is the first wireless communication apparatus and whose radius is 3 meters to 6 meters (the third distance interval). The external area (denoted as C) is an arc-shaped area whose center is the first wireless communication apparatus and whose radius is 6 meters to 10 meters (the second distance interval).

Therefore, if it is determined, based on the distance change trend, that the second wireless communication apparatus enters the adjacent area from the external area, it is determined that the user is moving close to the lock; or if it is determined, based on the distance change trend, that the second wireless communication apparatus enters the external area from the adjacent area, it is determined that the user is moving away from the lock.

Further, state information of the lock can be obtained in response to that the communication connection is established between the first wireless communication apparatus and the second wireless communication apparatus; and the step of determining that the user is moving close to or is moving away from the lock further includes: if the state information indicates the unlocked state, and it is determined, based on the distance change trend, that the second wireless communication apparatus is located in the external area, determining that the user is moving away from the lock.

In other words, if the lock is in the unlocked state, and it is detected that the second wireless communication apparatus is located in the external area, a displacement trend of the second wireless apparatus does not need to be considered, and it can be determined that the user is moving away from the lock.

In addition, if the lock cannot be controlled to be in the unlocked state, an abnormality reminder can be provided for the user, so that the user manually unlocks; and if the lock cannot be controlled to be in the locked state, an abnormality reminder can be provided for the user, so that the user manually locks.

The following describes an application effect of the technical solution with reference to a specific instance.

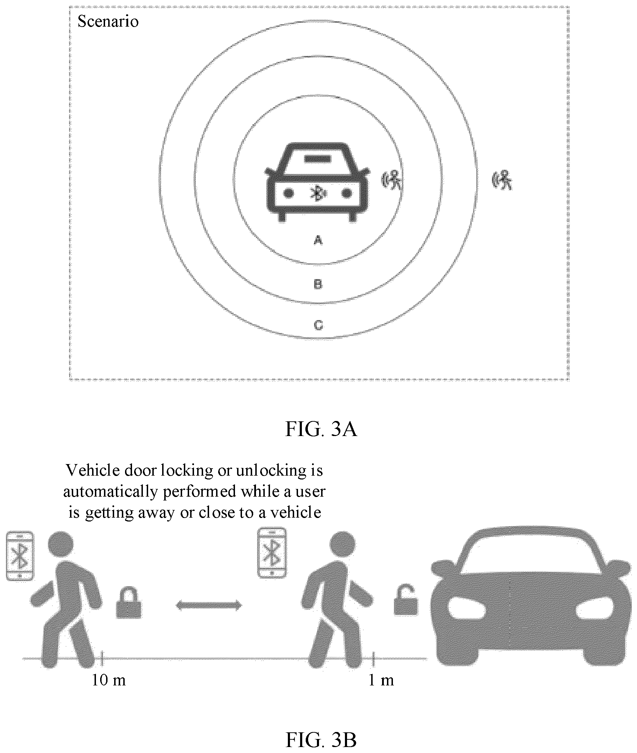

With reference to the scenario shown in FIG. 3A, the technical solution of the present specification can be used to control a vehicle door lock (for example, a cockpit door lock) of an intelligent electric vehicle. An in-vehicle infotainment system has a Bluetooth module, and a smart device (for example, a mobile phone or a smartwatch) carried by the user also has a Bluetooth module. In addition, an application program can be installed on the smart device carried by the user, and control permission for the vehicle door lock of the intelligent electric vehicle is built in to the application program. Before the user actually uses the smart device, it needs to be ensured that the application keeps a background active state, and the Bluetooth module of the smart device is turned on by default. There are an area A, an area B, and an area C near the vehicle, the area A is an adjacent area, the area B is a middle area, and the area C is an external area. For a size of each area, references can be made to FIG. 2.

With reference to FIG. 3B, the user can move relative to the intelligent vehicle without any operation. The user is moving away from or close to the vehicle. In response to that a Bluetooth connection is established between the smart device and the in-vehicle infotainment system, the application program continuously monitors Bluetooth signal strength, estimates a distance change trend between the user and the vehicle based on a Bluetooth signal change trend, and automatically sends an unlocking instruction to the in-vehicle infotainment system if it is determined that the user enters the area A from the area C. The in-vehicle infotainment system automatically performs vehicle door unlocking (unlocking). If it is determined that the user is in the area C and the vehicle door is in the unlocked state, a locking instruction is automatically sent to the in-vehicle infotainment system, and the in-vehicle infotainment system performs vehicle door locking (locking).

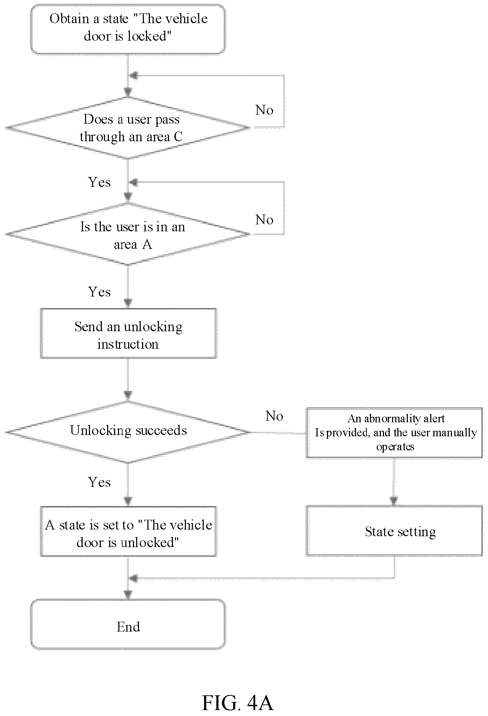

FIG. 4A shows an unlocking procedure performed by the application program on the smart device of the user. As shown in FIG. 4A, after the user carries the smart device and enters a signal coverage area of the Bluetooth module of the in-vehicle infotainment system, a Bluetooth connection is established between the smart device and the in-vehicle infotainment system, and the application program on the smart device can obtain a vehicle door state "The vehicle door is locked" from the in-vehicle infotainment system through the Bluetooth connection. Based on signal strength of the Bluetooth connection, the application program estimates a distance between the user and the vehicle, and determines an area (the area A, the area B, or the area C) in which the user is located at each moment. If it is determined that the user passes through the area C and then enters the area A, it indicates that unlocking needs to be performed, an unlocking instruction is sent to the in-vehicle infotainment system. If the in-vehicle infotainment system unsuccessfully unlocks, a feedback can be provided for the application program on the smart device, and the application program can provide an abnormality alert, so that the user manually unlocks. After the in-vehicle infotainment system detects that unlocking is performed, a vehicle lock state is set to "The vehicle door is unlocked", and vehicle door state information is synchronized to the application program on the smart device of the user through the Bluetooth connection.

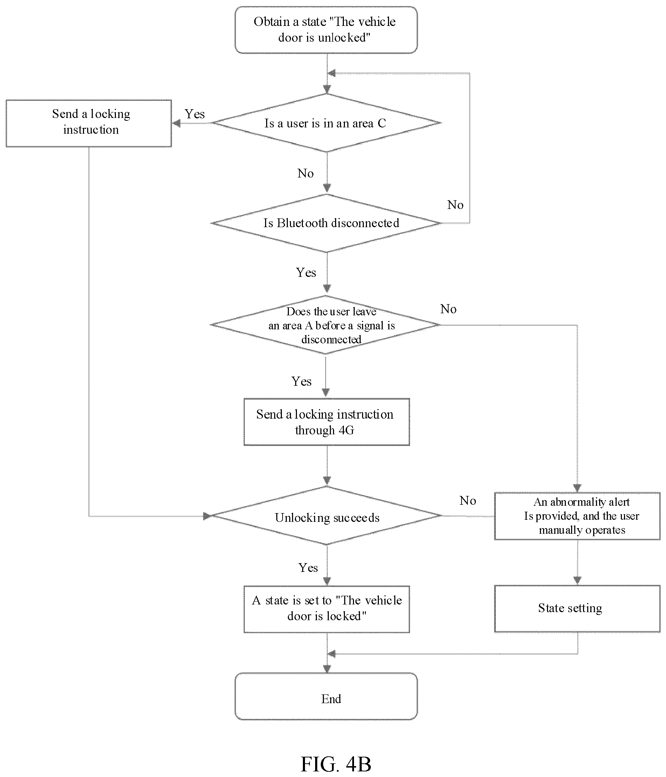

FIG. 4B shows an unlocking procedure performed by the application program on the smart device of the user. As shown in FIG. 4B, the application program determines that a current vehicle door state is "The vehicle door is unlocked", continues to monitor a Bluetooth signal strength change, estimates a distance between the user and the vehicle based on a strength change trend, and further determines an area in which the user is located at each moment (the area A, the area B, or the area C). If it is determined that the user is in the area C, it is determined that locking needs to be performed, and a locking instruction is sent to the in-vehicle infotainment system through the Bluetooth connection. If it is determined that the user is not in the area C and the Bluetooth connection is normal, monitoring is continued. If it is determined that the user is not in the area C, but the Bluetooth connection is disconnected, whether the user leaves the area A before the Bluetooth connection is disconnected is determined. If the user leaves the area A before the Bluetooth connection is disconnected, it is determined that locking needs to be performed, and a locking instruction can be sent to a network module of the in-vehicle infotainment system through a 4G network of the smart device. If the user does not leave the area A before the Bluetooth connection is disconnected, an abnormality alert is provided, so that the user manually locks. After the in-vehicle infotainment system detects that locking is performed, the in-vehicle infotainment system sets a vehicle lock state to "The vehicle door is locked".

According to the technical solution provided in the present specification, an activity of moving close to or away from the lock by the user is converted into a wireless communication signal strength change trend, to estimate the distance between the user and the lock based on the signal strength change trend, and determine an activity trend of the user. As such, when in a case of being imperceptible to the user, an intention of the user for the lock can be confirmed, thereby implementing lock control imperceptible to the user.

In addition, in an implementation in which the vehicle door lock is automatically controlled based on the Bluetooth connection, the user does not need to turn on a mobile phone based on a background activity maintenance capability of a mobile phone end program, and an application program on the mobile phone determines a location area of the user based on the signal strength of the Bluetooth connection, to automatically implement unlocking or locking according to a need. The user can automatically unlock and lock the vehicle without any additional operation, which provides extremely high convenience and improves personalized experience.

In addition, the above implementations further have the following advantages:
1. Low energy consumption: A Bluetooth technology, especially Bluetooth low energy (BLE), has extremely low energy consumption in a standby state, and is applicable to such an application.
2. Easy implementation: Most modern smartphones are equipped with a Bluetooth function. The user does not need to purchase an additional device, and a vehicle end is easily integrated with a Bluetooth module.
3. Safety: Through safety pairing and encrypted communication, communication safety can be ensured, and unauthorized access can be prevented.
4. User experience: This automated operation simplifies interaction between the user and the vehicle, and improves user experience.

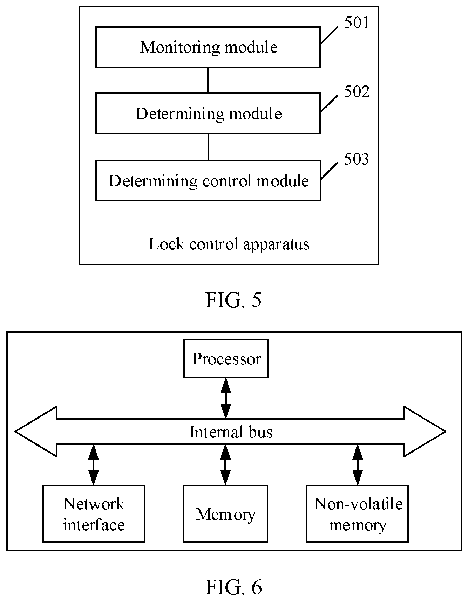

The present specification provides a lock control apparatus. As shown in FIG. 5, a first wireless communication apparatus is disposed in an adjacent area of a lock, and control permission for the lock is bound to a second wireless communication apparatus.

The apparatus includes: a monitoring module 501, configured to: when a user carries the second wireless communication apparatus, monitor a signal strength change trend of a communication connection in response to that the communication connection is established between the first wireless communication apparatus and the second wireless communication apparatus; a determining module 502, configured to determine a distance change trend of the second wireless communication apparatus relative to the first wireless communication apparatus based on the signal strength change trend; and a determining control module 503, configured to: if it is determined, based on the distance change trend, that the user is moving close to the lock, control the lock to be in an unlocked state; and/or if it is determined, based on the distance change trend, that the user is moving away from the lock, control the lock to be in a locked state.

The above apparatus implementation corresponds to the method implementations. For specific descriptions, references can be made to some of the descriptions of the method implementations. Details are omitted herein for simplicity. The apparatus implementation is obtained based on the corresponding method implementations, and has the same technical effects as the corresponding method implementations. For specific descriptions, references can be made to the corresponding method implementations.

An implementation of the present specification further provides a computer storage medium. The computer storage medium can store a plurality of instructions, and the instructions are adapted to be loaded by a processor and to perform the method in the implementations of the present specification.

The present specification further provides a computer program product. The computer program product stores at least one instruction, and the at least one instruction is loaded by the processor to perform in the method in the implementations of the present specification.

An implementation of the present specification further provides a schematic structural diagram of an electronic device shown in FIG. 6. At a hardware level, the electronic device includes a processor, an internal bus, a network interface, a memory, and a non-volatile memory, and certainly may further include hardware required by other transactions. The processor reads a corresponding computer program from the non-volatile memory to the memory and then runs the computer program to implement the lock control method.

Certainly, in addition to a software implementation, the present specification does not exclude other implementations, such as a logic device or a combination of software and hardware. In other words, an execution entity of the following processing flow is not limited to each logic unit, but can also be hardware or logic devices.

In the 1990s, whether a technical improvement is a hardware improvement (for example, an improvement to a circuit structure such as a diode, a transistor, or a switch) or a software improvement (an improvement to a method procedure) can be clearly distinguished. However, as technologies develop, current improvements to many method procedures can be considered as direct improvements to hardware circuit structures. A designer usually programs an improved method procedure into a hardware circuit, to obtain a corresponding hardware circuit structure. Therefore, a method procedure can be improved by using a hardware entity module. For example, a programmable logic device (PLD) (for example, a field programmable gate array (FPGA)) is such an integrated circuit, and a logical function of the PLD is determined by a user through device programming. The designer performs programming to "integrate" a digital system to a PLD without requesting a chip manufacturer to design and produce an application specific integrated circuit chip. In addition, at present, instead of manually manufacturing an integrated circuit chip, this type of programming is mostly implemented by using "logic compiler" software. The software is similar to a software compiler used to develop and write a program. Original code needs to be written in a particular programming language for compilation. The language is referred to as a hardware description language (HDL). There are many HDLs, such as the Advanced Boolean Expression Language (ABEL), the Altera Hardware Description Language (AHDL), Confluence, the Cornell University Programming Language (CUPL), HDCal, the Java Hardware Description Language (JHDL), Lava, Lola, MyHDL, PALASM, and the Ruby Hardware Description Language (RHDL). The very-high-speed integrated circuit hardware description language (VHDL) and Verilog are most commonly used. A person skilled in the art should also understand that a hardware circuit that implements a logical method procedure can be readily obtained once the method procedure is logically programmed by using the several described hardware description languages and is programmed into an integrated circuit.

A controller can be implemented by using any appropriate method. For example, the controller can be a microprocessor or a processor, or a computer-readable medium that stores computer-readable program code (such as software or firmware) that can be executed by the microprocessor or the processor, a logic gate, a switch, an application-specific integrated circuit (ASIC), a programmable logic controller, or an embedded microprocessor. Examples of the controller include but are not limited to the following microprocessors: ARC 625D, Atmel AT91SAM, Microchip PIC18F26K20, and Silicone Labs C8051F320. The memory controller can also be implemented as a part of the control logic of the memory. A person skilled in the art also knows that, in addition to implementing the controller by using only the computer-readable program code, logic programming can be performed on method steps to enable the controller to implement the same function in forms of the logic gate, the switch, the application-specific integrated circuit, the programmable logic controller, the embedded microcontroller, etc. Therefore, the controller can be considered as a hardware component, and an apparatus included in the controller for implementing various functions can also be considered as a structure in the hardware component. Alternatively, the apparatus configured to implement various functions can even be considered as both a software module implementing the method and a structure in the hardware component.

Systems, apparatuses, modules, or units that are described in the above implementations can be for example implemented by using a computer chip or an entity, or by using a product with a certain function. A typical implementation device is a computer. For example, the computer can be, for example, a personal computer, a laptop computer, a cellular phone, a camera phone, a smartphone, a personal digital assistant, a media player, a navigation device, an email device, a game console, a tablet computer, or a wearable device, or a combination of any of these devices.

For ease of description, the above apparatus is described by dividing functions into various units. Certainly, when the present specification is implemented, a function of each unit can be implemented in one or more pieces of software and/or hardware.

A person skilled in the art should understand that the implementations of the present specification can be provided as methods, systems, or computer program products. Therefore, the present specification can use a form of hardware only implementations, software only implementations, or implementations with a combination of software and hardware. Moreover, the present specification can use a form of a computer program product that is implemented on one or more computer-usable storage media (including but not limited to a disk memory, a CD-ROM, an optical memory, etc.) that include computer-usable program code.

The present specification is described with reference to the flowcharts and/or block diagrams of the methods, the devices (systems), and the computer program products based on the implementations of the present specification. It should be understood that computer program instructions can be used to implement each procedure and/or each block in the flowcharts and/or the block diagrams and a combination of a procedure and/or a block in the flowcharts and/or the block diagrams. These computer program instructions can be provided for a general-purpose computer, a dedicated computer, an embedded processor, or a processor of another programmable data processing device to generate a machine, so the instructions executed by the computer or the processor of the another programmable data processing device generate an apparatus for implementing a specific function in one or more processes in the flowcharts and/or in one or more blocks in the block diagrams.

Alternatively, these computer program instructions can be stored in a computer-readable storage that can instruct a computer or another programmable data processing device to work in a specific manner, so the instructions stored in the computer-readable storage generate an artifact that includes an instruction apparatus. The instruction apparatus implements a specific function in one or more procedures in the flowcharts and/or in one or more blocks in the block diagrams.

Alternatively, these computer program instructions can be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

In a typical configuration, a computing device includes one or more processors (CPU), an input/output interface, a network interface, and a memory.

The memory may include a non-persistent memory, a random access memory (RAM), a non-volatile memory, and/or another form that are in a computer-readable medium, for example, a read-only memory (ROM) or a flash memory (flash RAM). The memory is an example of the computer-readable medium.

The computer-readable medium includes permanent and non-permanent, removable and non-removable media, and can store information by using any method or technology. The information can be computer-readable instructions, a data structure, a program module, or other data. Examples of a computer storage medium include but are not limited to a phase change random access memory (PRAM), a static random access memory (SRAM), a dynamic random access memory (DRAM), another type of random access memory (RAM), a read-only memory (ROM), an electrically erasable programmable read-only memory (EEPROM), a flash memory or another memory technology, a compact disc read-only memory (CD-ROM), a digital versatile disc (DVD) or another optical storage, a cassette magnetic tape, a tape and disk storage or another magnetic storage device or any other non-transmission media that can be configured to store information that a computing device can access. As described in the present specification, the computer-readable medium does not include transitory computer-readable media (transitory media) such as a modulated data signal and a carrier.

It should also be noted that the terms "include", "comprise", or any other variants thereof are intended to cover a non-exclusive inclusion, so that a process, a method, a product, or a device that includes a list of elements not only includes those elements but also includes other elements that are not expressly listed, or further includes elements inherent to such a process, method, product, or device. Without more constraints, an element preceded by "includes a ..." does not preclude the existence of additional identical elements in the process, method, product, or device that includes the element.

A person skilled in the art should understand that the implementations of the present specification can be provided as a method, a system, or a computer program product. Therefore, the present specification can use a form of hardware only implementations, software only implementations, or implementations with a combination of software and hardware. Moreover, the present specification can use a form of a computer program product that is implemented on one or more computer-usable storage media (including but not limited to a disk memory, a CD-ROM, an optical memory, etc.) that include computer-usable program code.

The present specification can be described in the general context of computer-executable instructions executed by a computer, for example, a program module. Generally, the program module includes a routine, a program, an object, a component, a data structure, etc. executing a specific task or implementing a specific abstract data type. The present specification can alternatively be practiced in distributed computing environments in which tasks are performed by remote processing devices that are connected through a communication network. In the distributed computing environments, the program module can be located in local and remote computer storage media including storage devices.

The implementations in the present specification are described in a progressive way. For same or similar parts of the implementations, mutual references can be made to the implementations. Each implementation focuses on a difference from other implementations. Particularly, the system implementations are basically similar to the method implementations, and therefore are described briefly. For related parts, references can be made to some descriptions of the method implementations.

The above-mentioned descriptions are merely some implementations of the present specification, and are not intended to limit the present specification. A person skilled in the art can make various variations and changes to the present specification. Any modification, equivalent replacement, and improvement made in the spirit and principle of the present specification shall fall within the scope of the claims in the present specification.

## Claims

1. A lock control method, wherein a first wireless communication apparatus is disposed in an adjacent area of a lock, and control permission for the lock is bound to a second wireless communication apparatus; and
when a user carries the second wireless communication apparatus, the method comprises:
monitoring a signal strength change trend of a communication connection in response to that the communication connection is established between the first wireless communication apparatus and the second wireless communication apparatus;
determining a distance change trend of the second wireless communication apparatus relative to the first wireless communication apparatus based on the signal strength change trend; and
if it is determined, based on the distance change trend, that the user is moving close to the lock, controlling the lock to be in an unlocked state; and/or
if it is determined, based on the distance change trend, that the user is moving away from the lock, controlling the lock to be in a locked state.

2. The method according to claim 1, wherein the lock is a door lock of a vehicle, the first wireless communication apparatus is an in-vehicle infotainment apparatus with a wireless communication function, and the second wireless communication apparatus is a portable apparatus with a wireless communication function.

3. The method according to claim 1, wherein the communication connection is a Bluetooth connection.

4. The method according to claim 1, further comprising:
obtaining state information of the lock in response to that the communication connection is established between the first wireless communication apparatus and the second wireless communication apparatus;
wherein the controlling the lock to be in the unlocked state includes:
changing a state of the lock to the unlocked state when the state information indicates the locked state; and
skipping changing the state when the state information indicates the unlocked state; and
wherein the controlling the lock to be in the locked state includes:
changing the state of the lock to the locked state when the state information indicates the unlocked state; and
skipping changing the state when the state information indicates the locked state.

5. The method according to claim 4, wherein the method is applied to the second wireless communication apparatus;
the changing the state of the lock to the unlocked state includes:
sending an unlocking control instruction to the first wireless communication apparatus, so that the first wireless communication state changes the state of the lock to the unlocked state in response to the unlocking control instruction; and
the changing the state of the lock to the locked state includes:
sending a locking control instruction to the first wireless communication apparatus, so that the first wireless communication state changes the state of the lock to the locked state in response to the locking control instruction.

6. The method according to claim 1, wherein the adjacent area includes a location point whose distance from the first wireless communication apparatus is less than or equal to a first distance;
wherein an external area includes a location point whose distance from the first wireless communication apparatus falls within a second distance interval , the first distance being less than or equal to a left-end value of the second distance interval, and a communication distance between the second wireless communication apparatus and the first wireless communication apparatus being greater than or equal to a right-end value of the second distance interval; and
wherein the determining that the user is moving close to the lock includes:
if it is determined, based on the distance change trend, that the second wireless communication apparatus enters the adjacent area from the external area, determining that the user is moving close to the lock; or
wherein the determining that the user is moving away from the lock includes:
if it is determined, based on the distance change trend, that the second wireless communication apparatus enters the external area from the adjacent area, determining that the user is moving away from the lock.

7. The method according to claim 6, wherein a middle area includes a location point whose distance from the first wireless communication apparatus falls within a third distance interval; the first distance is less than or equal to a left-end value of the third distance interval; and the left-end value of the second distance interval is greater than or equal to a right-end value of the third distance interval.

8. The method according to claim 6, further comprising:
obtaining state information of the lock in response to that the communication connection is established between the first wireless communication apparatus and the second wireless communication apparatus; and
the determining that the user is moving close to or is moving away from the lock further includes:
if the state information indicates the unlocked state, and it is determined, based on the distance change trend, that the second wireless communication apparatus is located in the external area, determining that the user is moving away from the lock.

9. The method according to claim 1, further comprising:
if the lock is incapable of being controlled to be in the unlocked state,
performing an abnormality reminder, so that the user manually unlocks; and
if the lock is incapable of being controlled to be in the locked state,
performing an abnormality reminder, so that the user manually locks.

10. A lock control apparatus, wherein a first wireless communication apparatus is disposed in an adjacent area of a lock, and control permission for the lock is bound to a second wireless communication apparatus; and
the apparatus comprises:
a monitoring module, configured to: when a user carries the second wireless communication apparatus, monitor a signal strength change trend of a communication connection in response to that the communication connection is established between the first wireless communication apparatus and the second wireless communication apparatus;
a determining module, configured to determine a distance change trend of the second wireless communication apparatus relative to the first wireless communication apparatus based on the signal strength change trend; and
a determining control module, configured to: if it is determined, based on the distance change trend, that the user is moving close to the lock, control the lock to be in an unlocked state; and/or if it is determined, based on the distance change trend, that the user is moving away from the lock, control the lock to be in a locked state.

11. A storage medium, wherein the storage medium stores a computer program, and when the computer program is executed by a processor, the steps of the method according to any one of claims 1 to 9 are implemented.

12. An electronic device, comprising a processor and a memory, wherein the memory stores a computer program, and the computer program is adapted to be loaded by the processor and to perform the steps of the method according to any one of claims 1 to 9.

13. A computer program product, wherein the computer program product stores at least one instruction, and when the at least one instruction is executed by a processor, the steps of the method according to any one of claims 1 to 9 are implemented.
